# EUROPÄISCHE PATENTSCHRIFT

(11) **EP 2 662 176 B1**
(45) Veröffentlichungstag und Bekanntmachung des Hinweises auf die Patenterteilung: **20.01.2021**
(21) Anmeldenummer: 13001448.3
(22) Anmeldetag: 21.03.2013
(51) Int. Cl.: B23K 20/04, B32B 15/01, H01M 2/02

(54) **Verfahren zur Herstellung eines metallischen Schichtverbundes, insbesondere bandförmigen Schichtverbundes**
Method for producing a metallic laminated multi-layer film, in particular a laminated multi-layer film in the form of a tape
Procédé de fabrication d'un composite en couche métallique, notamment d'un composite en couche en forme de bande

(30) Priorität: 07.05.2012 DE 102012008816
(43) Veröffentlichungstag der Anmeldung: 13.11.2013
(73) Patentinhaber: Stuth, Bernhard, 68165 Mannheim (DE)
(72) Erfinder: Stuth, Bernhard, 68165 Mannheim (DE)
(74) Vertreter: Cohausz Hannig Borkowski Wißgott

(56) Entgegenhaltungen:
- EP-A1- 0 917 951
- EP-A1- 0 945 209
- EP-A1- 0 945 209
- WO-A1-2011/099160
- WO-A2-02/058923
- US-A- 5 028 495

## Beschreibung

Die Erfindung betrifft die Herstellung eines Schichtverbundes, insbesondere metallbandförmigen Schichtverbundes gemäß dem Oberbegriff des Anspruchs 1 (siehe z.B. EP 0 945 209 A1).

### C. Stand der Technik

Metallische Schichten, insbesondere sogenannte dünne metallische Schichten auf metallischen Körpern, werden nach einer Vielzahl chemischer und physikalischer Verfahren hergestellt. Sogenannte dünne Schichten sind Schichten im Nanometerbereich oder Mikrometerbereich. Dünne Schichten im Sinne der Erfindung sind bevorzugt solche mit Schichtdicken kleiner als 10 Mikrometer, bevorzugt im Bereich von 0,5 bis 10 Mikrometer. Solche Schichten haben -je nach ihrer Zusammensetzung und Oberflächengestaltung - z.B. ästhetische oder technische Funktionen; sie können z.B. dem Schutz des Kernmaterials dienen.

Die Herstellung dünner metallischer Schichten auf vergleichsweise dicken metallischen Bändern (mit einem Schichtdickenverhältnis 1:10 und größer) ist im Stand der Technik grundsätzlich bekannt. Wo immer dünne metallische Oberflächenschichten auf Trägerbändern erzeugt werden, werden sie allerdings nach dem derzeitigen Stand der Technik einzeln und bereits als dünne Schichten erzeugt, insbesondere die im Zeitpunkt der Schichterzeugung bereits die gewünschte Enddicke aufweisen.

Bekannte Verfahren zur Erzeugung dünner metallischer Oberflächenschichten sind z.B.
a) Galvanisieren
b) stromlose (chemische) Beschichtung
c) Schmelztauchbeschichten
d) CVD/PVD.

Die Verfahren unterscheiden sich in der Dicke der mit ihnen erzeugbaren Schichten sowie in der Struktur und den Eigenschaften der erzeugten Schichten.

Nachteilig ist es bei diesen Beschichtungsverfahren, dass die Beschichtung jeweils auf Trägern erfolgt, die bereits endabmessungsnah sind. Daher sind entsprechend große Flächen herzustellen, zu reinigen, zu aktivieren und zu beschichten. Solche Beschichtungsverfahren sind daher aufwendig und kostenintensiv.

### D. Nachteile im Stand der Technik

Die durch Dünnschichtbeschichtungsverfahren, insbesondere durch Galvanisieren, hergestellten Schichten sind nicht porenfrei. Dünn beschichtete, insbesondere galvanisch beschichtete, Metallbänder müssen deshalb in einem zusätzlichen Arbeitsgang nachgewalzt werden. An den Porenwänden entlang kann das Kernmaterial, also das Material des die Beschichtung tragenden Metallbandes, leichter durch die Deckschicht diffundieren. Um eine geschlossene Schicht zu erreichen, sind - abhängig vom abgeschiedenen Material - Mindestdicken erforderlich. Bei der galvanischen Beschichtung mit Nickel beträgt die Mindestdicke ca. 3 µm.

Das für eine Beschichtung vorgesehene Metallband weist eine durchgehende Oxidschicht auf, wenn die Oxide nicht beseitigt oder reduziert wurden und die Beschichtung nicht unter Schutzgas oder im Vakuum erfolgt. Durch die Oxidschicht entsteht ein Kontaktwiderstand zwischen diesem zu beschichtenden Metallband und der aufzubringenden Schicht. Wird das beschichtete Metallband zur Leitung von Strom eingesetzt, muss dieser Kontaktwiderstand überwunden werden.

Die durch Dünnschichtbeschichtungsverfahren, insbesondere durch Galvanisieren, hergestellten Schichten sind für eine anschließende erhebliche Verformung nicht ausreichend haftfest. Dünn beschichtete, insbesondere galvanisch beschichtete, Metallbänder müssen deshalb zur Stärkung der Verbindung diffusionsgeglüht werden. Das ist insbesondere dann unumgänglich, wenn der Verbundkörper anschließend z.B. durch Tiefziehen verformt wird. Bei der Glühung bleibt die Oxidschicht als solche intakt, es bilden sich aber i.d.R. unerwünschte Mischkristalle in einer Diffusionsschicht aus, die zwischen dem zu beschichtenden Metallband und der aufgebrachten Schicht entsteht. Eine solche durch Diffusionsglühung entstehende Mischkristallschicht verbraucht Material der aufgebrachten Schicht und mindert damit deren Schutzfunktion.

### E. Aufgabenstellung

Der Erfindung liegt die Aufgabe zugrunde, ein Verfahren zur Herstellung von metallischen Schichten, insbesondere sogenannten dünnen metallischen Schichten, auf der Ober- und/oder Unterseite von Metallbändern und/oder in Metallbändern zu entwickeln,
- durch das im Laufe des Beschichtungsprozesses weniger Oberflächenoxide und sonstige metallische Einschlüsse in den Verbundkörper eingebracht werden
- durch das die Dicke von durch Wärmebehandlung entstehenden Mischkristallzonen beschränkt werden kann und
- das im Vergleich zu den Dünnschichtbeschichtungsverfahren ökonomisch vorteilhaft ist.

### F. Lösungsweg

Ein Verfahren zur Herstellung eines metallischen Schichtverbundes, insbesondere bandförmigen Schichtverbundes gemäß der Erfindung ist im Anspruch 1 definiert.

Es ist ein wesentlicher Aspekt der Erfindung, dass zunächst ein Schichtpaket erstellt wird, bei dem jede spätere dünne Schicht (kleiner 10 Mikrometer) zunächst jeweils als relativ dicke Schicht (größer 10 Mikrometer) zusammen mit wenigstens einem weiteren Metallband vorkommt, insbesondere wobei das wenigstens eine weitere Metallband wenigstens 10-fach, vorzugsweise mehr als 100-fach, dicker ist als das die jeweilige spätere dünne Schicht bildende Ausgangsmetallband.

Ein solches Schichtpaket entsteht z.B. durch Zusammenführen mehrerer Metallbänder, die von jeweiligen Bandspulen, insbesondere unter Wirkung einer rückziehenden oder bremsenden Kraft, abgewickelt werden. Wenigstens eines dieser Metallbänder bildet das wenigstens eine vorgenannte Ausgangsmetallband und wenigstens eines dieser Metallbänder das vorgenannte weitere Metallband.

Das zunächst noch lose Schichtpaket wird walzplattiert und hierbei ein erstes Mal in der Dicke reduziert, z.B. nur um ein Maß, das zur Verbindung benötigt wird, wie z.B. 60 %. Hierdurch entsteht ein Schichtverbund, der gegenüber dem ursprünglichen Schichtpaket bereits in der Dicke reduziert ist und nun durch Walzen in wenigstens einem Stich, ggf. auch mehreren Stichen, weiter reduziert wird. Es erfolgt so erfindungsgemäß eine wenigstens zweimalige Dickenreduktion und erfindungsgemäß derart, dass das wenigstens eine Ausgangsmetallband im erfindungsgemäß fertig gestellten Schichtverbund eine Dicke von kleiner gleich 10 Mikrometer, insbesondere eine Dicke von 0,5 Mikrometer bis 10 Mikrometer, aufweist. Bevorzugt wird ein Reduktionsgrad durch das auf das Walzplattieren folgende Walzen in wenigstens einem Stich von mindestens 50 % erzielt, weiter bevorzugt von mindestens 75 % und besonders bevorzugt von mindestens 85 %.

In der Erfindungsbeschreibung bezeichnet demnach das Schichtpaket die vor dem Plattieren unverbunden in den Walzspalt einlaufenden Bänder, und der Schichtverbund bezeichnet diese Bänder nach der Verbindung im Walzspalt. Unter der Dicke eines Schichtpaketes wird die Gesamtdicke aller Metallbänder des Schichtpaketes verstanden. Das Ausgangsmetallband bildet das Schichtmaterial, welches als Schicht mit dem weiteren Metallband, z.B. einem Kernband, verbunden wird.

Mit der Dickenreduktion zwangsweise verbunden ist die Zunahme der Fläche des reduzierten Schichtverbundes: Wird z.B. ein 6 mm starker bandförmiger Schichtverbund um 96 % reduziert, so wird die Fläche 25 mal so groß.

Bei der Flächenvergrößerung von Schichten, die durch Plattieren und anschließendes Walzen reduziert werden, sind die Reduktionsgrade der einzelnen Stufen multiplikativ wie folgt verknüpft: Wird die Dicke d des ursprünglichen Schichtpakets durch das Plattieren auf 0,4 d reduziert, d.h. ein Reduktionsgrad r von 0,6 (∼ 60 %) eingesetzt, so steigt die Fläche des erzeugten Schichtverbundes bereits auf das 2,5-fache [1/(1 - 0,6)]. Jede weitere Reduktion führt zu einer Multiplikation des Effektes mit dem Kehrwert von 1 - Reduktionsgrad. Bei einer weiteren Reduktion um 90 % beträgt der gesamte Reduktionsgrad 96 % und die gesamte Flächenvergrößerung damit das 25-fache der Ausgangsfläche.

Dieser Effekt wird bei der erfindungsgemäßen Herstellung von Schichtverbünden mit erfindungsgemäß "dünnen" Schichten systematisch genutzt.
Das geschieht dadurch, dass
- die Dicken des wenigstens einen weiteren Metallbandes möglichst hoch gewählt werden
- der teure Beschichtungsvorgang an möglichst kleinen Flächen vorgenommen wird, da die Beschichtung großer Flächen relativ teuer ist. Die Beschichtung soll durch Walzplattieren erfolgen, da Walzplattieren das einzige Verfahren ist, bei dem bei der Beschichtung bereits eine - und zwar erhebliche - Reduktion stattfindet, so dass bereits eine erste Flächenvergrößerung eintritt
- das wenigstens eine weitere Metallband und das wenigstens eine Ausgangsmetallband, das die gewünschte Schicht bildet, gemeinsam reduziert werden, so dass die Reduzierung einer Schicht nicht mit hohen Kosten separat vorgenommen werden muss
- die Reduktion durch Plattieren und Walzen eine entsprechende Flächenvergrößerung bewirkt, wobei i.d.R. die überwiegende Reduktion durch ein besonders produktives Verfahren, nämlich Bandwalzen, erreicht wird. Hinsichtlich der Wirtschaftlichkeit des Verfahrens ist bedeutsam, dass gerade das Auswalzen nach dem Plattieren mit hohen Geschwindigkeiten (z.B. beim Einsatz eines Quarto- oder Sexto-Gerüstes) und/oder Reduktionsgraden (z.B. beim Einsatz eines Sendzimir-Gerüstes) vorgenommen werden kann.

In der Kombination dieser Effekte liegt die Effizienz und damit der wirtschaftliche Effekt des vorgeschlagenen Verfahrens. Obwohl das Walzplattieren ein pro Flächeneinheit der Beschichtung teureres Verfahren ist als die billigeren unter den Verfahren zur Erzeugung dünner Schichten, ist es in Kombination mit dem Reduzieren durch Walzen dann wirtschaftlich günstiger, wenn der Reduktionsfaktor und damit die durch das Reduzieren hervorgerufene Vergrößerung der Beschichtungsfläche groß genug ist.

Die Verarbeitungsgeschwindigkeiten der angesprochenen Verfahren sind etwa wie folgt:

| **Verfahren** | **Geschwindigkeit** |
|---|---|
| | **m/min.** |
| Plattieren | 10 - 30 |
| Galvanisieren | 120 - 200 |
| Walzen | bis 1.000 |

Ein Reduktionsfaktor, der das erfindungsgemäße Verfahren wirtschaftlich macht, wird i.d.R. ein Zwischenglühen notwendig machen, das demnach erfindungsgemäß vorgesehen werden kann, beispielsweise bereits als ein Diffusionsglühen nach dem Walzplattieren zur Herstellung einer erhöhten Haftung der Schichten im Schichtverbund oder auch als rekristallisierendes Glühen nach einem Walzvorgang. Damit werden die Materialkombinationen nicht auf solche begrenzt, die beim Zwischenglühen keine (spröden) Mischkristallschichten bilden. Die Entstehung von Mischkristallschichten kann bei dem vorgeschlagenen Verfahren zugelassen werden, da sie in ihrer Dicke durch ein nach dem Glühen folgendes reduzierendes Walzen vermindert werden und/oder durch den Einsatz von Durchlaufglühen sehr dünn ausgebildet werden können.

Geht man davon aus, dass sowohl bei galvanischer Beschichtung als auch bei dem erfindungsgemäßen Verfahren das mit wenigstens einer Schicht zu versehende weitere Metallband, beispielsweise ein von Schichten umgebenes Kernmetallband, etwa von 6 mm auf 0,24 mm reduziert wird, so sind unter ökonomischen Aspekten lediglich die Kosten des Galvanisierens mit den Kosten der Herstellung des Ausgangsmetallbandes, z.B. einer Plattierfolie, und die Kosten der Reduktion durch Plattieren mit den Kosten der Reduktion durch Walzen zu vergleichen, da die übrigen Verfahrensschritte gleich sind. Nur wenn im folgenden Beispiel 1 die Kosten der Herstellung der Plattierfolie und die Mehrkosten der Dickenreduktion durch Plattieren gegenüber der Dickenreduktion durch Walzen das 25-fache der Kosten der Galvanisierung überschreiten, wird das erfindungsgemäße Verfahren unwirtschaftlich.

Ein Flächenvergrößerungsfaktor von 25 wird eher am unteren Ende der erzielbaren Flächenvergrößerung liegen, da empfohlen wird, beim Plattieren ein möglichst dickes ursprüngliches Schichtpaket zu bilden. Dies hat - wenn der beim Plattieren verwandte Reduktionsgrad konstant gehalten wird - zur Folge, dass zur Erreichung eines gleich dicken erfindungsgemäß hergestellten Schichtverbundes der nach dem Plattieren beim Walzen anzuwendende Reduktionsgrad ansteigen muss. Damit steigt die Flächenvergrößerung überproportional, nach den - den Intentionen der Erfindung eher gerecht werdenden - Daten des Beispiels 2 auf das fast 42-fache. In bevorzugter Weiterbildung wird demnach eine Gesamtreduktion angestrebt, die mindestens zu einer 25-fachen Flächenvergrößerung des erzeugten Schichtverbundes gegenüber dem ursprünglichen Schichtpaket führt.

| Arbeitsschritt | | Beispiel 1 | | Beispiel 2 | |
|---|---|---|---|---|---|
| | | | Grundmaterial | | Grundmaterial |
| | | % | mm | % | mm |
| | Ausgangsmaterial | | 6,0 | | 10 |
| Plattieren | Reduktion um ... auf ... | 60 | 2,4 | 60 | 4,0 |
| Walzen | Reduktion um ... auf ... | 90 | 0,24 | 94 | 0,24 |
| | Gesamter Reduktionsgrad | 96 | | 97,6 | |
| | | | | | |

| | | Multiplikator | | Multiplikator | |
|---|---|---|---|---|---|
| | Flächenvergrößerung | 25 | | 41,67 | |

Wird bei einem Dünnschichtbeschichtungsverfahren zur Verbesserung der Haftung eine Diffusionsglühung durchgeführt, so findet sie an einem dünnen Band mit einer dünnen Beschichtung statt. Der prozentuale Anteil der entstehenden Mischkristallschicht an der Gesamtdicke des Bandes ist deshalb höher als bei der im Folgenden beschriebenen Weiterbildung des erfindungsgemäßen Verfahrens.

Der Kern einer vorgeschlagenen Weiterbildung des Verfahrens besteht darin, eine notwendig werdende Diffusionsglühung im Fertigungsablauf so vorzuverlegen, dass danach noch wenigstens ein reduzierender Walzstich durchgeführt wird, insbesondere dergestalt, dass die Diffusionsglühung noch an vergleichsweise dicken Bändern mit einer dicken Beschichtung vorgenommen wird. Da eine Mischkristallschicht bzw. Diffusionsschicht eine im Wesentlichen technisch bedingte absolute Dicke einnimmt, ist diese Dicke aufgrund der noch vor dem wenigstens einen folgenden weiteren Walzstich gegebenen Schichtverbundstärke relativ betrachtet klein und wird in dieser Relation mitreduziert. Der Anteil dieser Mischkristallschicht an der Gesamtdicke des erstellten bandförmigen Schichtverbundes ist somit prozentual niedriger und bleibt bei einer weiteren Verformung des Bandes annähernd konstant. Weitere erforderlich werdende Glühbehandlungen werden nicht als Diffusionsglühungen, sondern als Rekristallisierungsglühungen, vorzugsweise in Durchlaufglühen, vorgenommen, so dass die Zeitdauer der Wärmebehandlung zu kurz ist, als daß neue ausgedehnte Mischkristallzonen entstehen könnten.

Bei der starken Reduktion des gebildeten Schichtverbundes müssen folgende Probleme gelöst werden:
- Beim Walzplattieren wird mit hohen Drücken gearbeitet; es ist deshalb mit stärkerer Walzenbiegung zu rechnen als bei dem mit geringeren Drücken durchgeführten Kaltwalzen. Es muss vermieden werden, dass das plattierte Band einen konvexen Querschnitt annimmt.
- Generell wird in der Literatur zum Plattieren angenommen, dass Deckschicht und Kernmaterial beim Plattieren und weiteren Auswalzen proportional reduziert werden. Bei dünnen Auflagen ist aber zu bedenken, dass das Material mit abnehmender Dicke härter wird. Für harte dünne Schichten zwischen dicken weicheren Schichten gilt der Boudinage-Effekt: Solche Schichten zerreißen bei starker Verformung und werden in das weichere Material eingebettet. Bevor der Boudinage-Effekt eintritt, muss der Verbund geglüht werden.
- Warmband wird nach DIN EN 10 051 mit eingegrenzten Rauhigkeitswerten geliefert. Diese Rauhigkeitswerte liegen nah an der Gesamtschichtdicke der Dünnschichtbeschichtung. Wenn sich die Spitzen in das Auflagematerial eindrücken, kann die Beschichtung beim Auswalzen durchstoßen werden. Außerdem wird die Oberfläche des Kern- und/oder des Auflagebandes vor dem Plattieren durch Bürsten mit Draht oder durch Strahlen aktiviert. Dadurch kann die Oberfläche zusätzlich aufgerauht werden. Die Rauhigkeitswerte des zu verbindenden Materials müssen ggf. eingegrenzt werden.
- Bei einer Reihe von Metallkombinationen wird das Band nach der Herstellung einer Kombination durch Plattieren und vor seiner endgültigen Verwendung - u.U. mehrfach - einer rekristallisierenden Glühung unterworfen werden müssen. Bei jeder Zwischenglühung entsteht eine - häufig spröde - Mischkristallschicht. Die Mischkristallschicht könnte wegen der mehrfachen Glühvorgänge insgesamt dicker ausfallen, als sie durch Diffusionsglühung nach galvanischer Beschichtung entsteht. Das wäre unerwünscht.

### G. Ausführliche Beschreibung der Erfindung

### 1. Einsatz schmelzmetallurgisch erzeugter Bänder

Sollen schmelzmetallurgisch erzeugte Bänder als Ausgangsmetallband eingesetzt werden, müssen die Bänder möglichst einschlussfrei hergestellt werden. Dazu ist besondere Sorgfalt beim Vergießen erforderlich, u.U. auch ein Umschmelzen, z.B. nach dem ESR-Verfahren. Die dadurch entstehenden Kosten können den Einsatz schmelzmetallurgisch erzeugter Bänder aus unlegierten Metallen wirtschaftlich uninteressant machen.

### 2. Einsatz von Bändern, die direkt oder indirekt durch Elektrolyse gewonnen wurden

Die auf- oder einzubringenden Schichten, d.h. die Ausgangsmetallbänder, werden besonders vorteilhaft aus elektrolytisch in Bandform gewonnenem Material hergestellt. Elektrolytisch werden Bänder, vor allem aus Kupfer (für PCB's) und Nickel, dadurch hergestellt, dass Metallionen auf einer im Elektrolysebad hängenden sich drehenden Trommel abgeschieden werden, von der der metallische Niederschlag als Band abgezogen werden kann. Bänder, die aus verbundenen elektolytisch gewonnenen Kathodenblechen bestehen und durch Walzen reduziert wurden, können aus Eisen, Kobalt, Nickel, Kupfer, Zink, Cadmium, Zinn und Blei bestehen. Chrom und Mangan werden zwar gleichfalls als Kathodenbleche erzeugt, sie zerbrechen aber beim Ablösen von den Permanentkathoden.

Elektrolytisch - gleich nach welchem Verfahren - hergestellte Bänder können einschlussfrei und mit einem hohen Reinheitsgrad hergestellt werden. Das ist deshalb wichtig, weil zunächst im Schichtkörper eingeschlossene Partikel sich bei der Reduktion der Schicht an der Oberfläche anreichern, und zwar um so stärker, je dünner die Schicht wird. Die Verwendung elektrolytisch hergestellter Bänder ist deshalb nicht nur ökonomisch sondern auch technisch vorteilhaft.

### 3. Mehrschichtige Beschichtungen, insbesondere dünne Beschichtungen und dünne außenliegende Beschichtungen

Mehrschichtige erfindungsgemäße Schichtverbünde können hergestellt werden, indem Metallband von mehreren Ablaufhaspeln dem Walzspalt zugeführt wird. Alternativ können die zugeführten Bänder ihrerseits durch Plattieren hergestellt worden sein, z.B. gemäß dem hier beschriebenen erfindungsgemäßen Verfahren. Ein solches Vorplattieren ist dann erforderlich, wenn die Beschichtungsdicke im Endprodukt derart dünn sein soll, dass das Ausgangsmaterial vor dem Plattieren dünner als ca. 40 µm sein muss. Wird ein 40 µm dickes Band durch Plattieren um 60 % und durch anschließendes Auswalzen um 97 % reduziert, ist die aus dem Schichtmaterial entstehende Schicht nur noch 0,48 µm dick. Sollen dünnere Schichten hergestellt werden, muss der Reduktionsgrad durch Plattieren oder Auswalzen erhöht werden oder vorplattiertes Material eingesetzt werden.

Als Schmiermittel werden beim Walzen Öle und Emulsionen eingesetzt. Werden diese Schmiermittel, z.B. durch Zentrifugen, gereinigt, zeigt sich, dass beim Walzen ein metallischer Abrieb entsteht. Dieser Abrieb geht immer zu Lasten der jeweiligen Oberflächenschicht. Das Ausmaß des Abriebs hängt ab von der Rauhigkeit und Härte der Materialoberfläche, der Rauhigkeit der Walzen, der Schmierwirkung des eingesetzten Schmiermittels und weiteren Faktoren. Für das erfindungsgemäße Beschichtungsverfahren ist diese Erscheinung von Bedeutung, weil sie sich auf die Berechnung der Dicke des Ausgangsschichtmaterials auswirkt. Die Dicke des Ausgangsschichtmaterials, insbesondere also aussen liegender Ausgangsmetallbänder, ist um den Abrieb auf den verschiedenen Walzstufen zu erhöhen.

Ist das außenliegende Material besonders wertvoll, kann es sinnvoll sein, die spätere Außenschicht zu ihrem Schutz vor Abrieb während des Plattierens und späteren Auswalzens durch eine zum Verschleiß bestimmte Schicht zu schützen; die ihrerseits durch Plattieren aufgebracht werden kann.

### 4. Anforderungen an das Kernmaterial

Oberflächenrauhigkeit des Schicht- und/oder Kernmaterials führt nach ihrer Verbindung dazu, dass die Dicke von Schicht- und Kernmaterial (also Ausgangsmetallband und weiterem Metallband) nicht durchgehend erhalten bleibt. Die Oberflächenrauhigkeit des Schicht- und Kernmaterials soll deshalb möglichst weitgehend einschränkt werden. Das kann z.B. durch die Auswahl des Verfahrens geschehen, mit dem eingesetztes Warmband gebeizt wird. So führt das Beizen mit Schwefelsäure zu einer höheren Rauhigkeit als das Beizen mit Salzsäure. Die Rauhigkeit gebeizten Warmbandes oder anderen Vormaterials kann weiter durch einen Dressierstich, insbes. einen Dressierstich mit polierten Walzen, abgebaut werden.

Darüber hinaus hat sich gezeigt, dass sich beim Auswalzen durch die Streckung des Materials die Rauhigkeitswerte im Verbund abbauen.

### 5. Ausgangsabmessungen der eingesetzten Bänder

Ausgangs- und Endabmessungen sollen sich in etwa in folgendem Rahmen bewegen:

| | **Dicke** | **Maßeinheit** | **von** | **bis** |
|---|---|---|---|---|
| **Schicht** | vor Reduzierung | µm | 40 | 750 |
| | nach Reduzierung | µm | 0,5 | 10 |
| | | | | |
| **Kern** | vor Reduzierung | mm | 2 | 15 |
| | nach Reduzierung | mm | 0,05 | 3,0 |

Die erfindungsgemäßen bandartigen Schichtverbünde sollen z.B. hergestellt werden aus vergleichsweise dickem Kernmaterialzwischen 5 und 10 mm, das mit einer vergleichsweise dicken Ausgangsmetallschicht in Form eines Bandes zwischen 40 und 750 µm durch Walzplattieren beschichtet wird. Durch Walzplattieren und anschließende weitere Reduktion sollen Endabmessungen von min. 0,0505 bis max 3,01 mm erreicht werden. Der Gesamtreduktionsgrad beträgt bevorzugt mindestens 75 %. Die Metallbänder weisen dann eine Beschichtungsstärke von 0,5 bis 10 µm auf.

### 6. Walzplattieren

Die Technik des Walzplattierens, die Bandvorbereitung und die materialabhängigen zur Grünhaftung der zu verbindenden Schichten erforderlichen Verformungsgrade sind bekannt. Für das Plattieren von Nickel auf Stahl ist bei Raumtemperatur z.B. eine Verformung von 60 % ausreichend.

### a) Flächenvergrößerung durch Reduktion

Walzplattieren ist das einzige Beschichtungsverfahren, bei dem die Beschichtung bereits zu einer Reduktion und einer damit verbundenen Flächenvergrößerung führt.

### b) Durchgehende Oxidschichten

Falls die an den Oberflächen der zu verbindenden Metallbänder haftenden Oxide nicht abgetragen oder reduziert werden, werden sie Teil des Schichtverbundes. Oxide sind hart und lassen sich kaum verformen. Die zu verbindenden Bänder sollten deshalb eine möglichst dünne Oxidschicht aufweisen. Dazu kann es vorgesehen sein, dass das wenigstens eine schichtbildende Ausgangsmetallband und/oder das z.B. einen Kern bildende weitere wenigstens eine Metallband kurz vor der Verbindung durch Walzplattieren durch mechanische (z.B. Strahlen oder Bürsten) oder chemische (z.B. Beizen oder Glühen) Verfahren von der Oxidschicht befreit werden. Durch Führung des jeweiligen Bandes in einem Schutzgasschnabel, der bis kurz vor den Walzspalt reicht, kann eine Reoxidation weitgehend vermieden werden.

Sofern sich eine dünne Oxidschicht auf den zu verbindenden Metallen gebildet hat, wird sie beim Walzplattieren aufgerissen, so dass sich auch metallisch blanke Flächen verbinden. Eine geschlossene Oxidschicht wird durch das Plattieren also zerstört.

### c) Porenfreiheit

Beim Plattieren entstehen aufgrund der hohen Verdichtung des Materials porenfreie Schichten.

### d) Walzendurchbiegung

Um zu vermeiden, dass der plattierte Schichtverbund einen konvexen Querschnitt annimmt, können Stützwalzen mit nahezu quadratischem oder sogar überquadratischem Querschnitt eingesetzt werden oder andere Methoden angewandt werden, mit denen eine Walzenbiegung vermieden oder ausgeglichen werden kann. Eine einmal entstandene konvexe Bandform kann zwar beim nachfolgenden Walzen des bandförmigen Schichtverbundes korrigiert werden, diese Korrektur kann sich aber auf die Schichtdicke auswirken, so dass die Schichtdicke über den Bandquerschnitt nicht mehr konstant ist.

### 7. Rekristallisierendes Glühen

### a) Gründe

Durch die Reduktion nimmt die Härte sowohl des weiteren Metallbandes (z.B. des Kernmaterials) als auch der die Schichten bildenden Ausgangsmetallbänder durch Kaltverfestigung zu. Die Zunahme ist ggf. durch einen Glühprozess wieder zu beseitigen. Nach dem Walzplattieren wird der Verbund üblicherweise auch deshalb geglüht, um die Haftung zwischen den Bändern zu verstärken.

### b) Entstehung von Mischkristallschichten, insbes. von spröden Mischkristallschichten

Beim Glühen entstehen Mischkristallschichten, die - in Abhängigkeit von den verbundenen Materialien - häufig nicht nur härter, sondern auch spröder sind als das angrenzende Material. Diese Mischkristallschichten erschweren eine weitere Verformung. Bei dem vorgeschlagenen Verfahren spielen diese Schichten eine nur geringe Rolle. Die Dicke dieser Schichten wird durch das anschließende Walzen vermindert; sie kann weiter dadurch begrenzt werden, dass zum rekristallisierenden Glühen nach dem Walzen Durchlaufglühen eingesetzt werden. In Durchlaufglühen kann eine Rekristallisation in kürzerer Zeitdauer erreicht werden als in Haubenglühen, so dass sich auch nur dünnere Mischkristallschichten ausbilden. Bei dem durch Walzen hergestellten erfindungsgemäßen bandförmigen Schichtverbund muss im Gegensatz zu dünn beschichtetem Band auch keine Diffusionsglühung stattfinden.

Wird nach dem Plattieren geglüht, entsteht eine Mischkristallschicht, die z.B. beim Schichtverbund aus Nickel/Stahl ca. 1,4 µm dick ist. Diese Mischkristallschicht wird beim nachfolgenden Reduzieren ebenfalls, insbesondere um ca. 50 bis 97 %, reduziert. Die verbleibende dünne Mischkristallschicht hat deshalb keinen erheblichen Einfluss auf die Materialeigenschaften.

### 8. Reduzieren durch Walzen

Werden die Metallbänder der gebildeten Schichtpakete mit einem Verformungsgrad von 60 % miteinander verbunden und wird der gebildete Schichtverbund anschließend um 50 % reduziert, so beträgt der Gesamtreduktionsgrad 80 %. Der Schichtverbund besitzt dann nur noch 20 % der Ausgangsstärke: (1-0,6)*(1-0,5) = 0,2. Innerhalb des Schichtverbundes sind die einzelnen Schichten gleichmäßig reduziert worden. Plattieren lassen sich nur Folien mit einer Dicke von mindestens ca. 40 µm; nach dem Walzplattieren hat die Schicht dann eine Dicke von nur 16 µm. Ziel des Verfahrens ist es aber, dünnere Schichten herzustellen. Der Plattierverbund muss deshalb durch Walzen weiter - und zwar bevorzugt um mindestens weitere 50 % - reduziert werden.

### a) Keine Schichtmischung beim Walzen dünner Schichten

Walzversuche haben ergeben, dass auch bei starker Reduktion und der dadurch verursachten Oberflächenvergrößerung das Oberflächenmaterial sich nicht mit Material aus dem Bandkern mischt. Die bekannte Voreilung der Oberfläche vor dem Kern des zu walzenden Materials führt also auch bei dünnen Schichten nicht zu einer turbulenten, sondern zu einer laminaren Verformung. Auch beim weiteren Auswalzen dünner Schichten wird also die geschlossene Schicht bis zum Eintreten des Boudinage-Effektes nicht zerstört.

### b) Zerreißen von Schichten

Beim Walzen verformt sich bei gegebenem Druck weiches Material stärker als hartes. Sind hartes und weiches Material verbunden, so wird das harte Material mitgerissen. Dabei kann es zerreißen (Boudinage Effekt). Dünne harte Schichten auf einem dicken weichen Material reißen, wenn die Verformung des weichen Materials höher liegt als die Zugfestigkeit des harten Materials. Der Gesamtverformungsgrad soll deshalb bevorzugt die Zugfestigkeit harter und dünner Schichten im Verbund nicht überschreiten.

### 9. Rekristallisierendes Glühen nach dem Walzen

Zum rekristallisierenden Glühen wird zweckmäßigerweise eine Durchlaufglühe eingesetzt, wenn das Entstehen einer Mischkristallzone möglichst weitgehend vermieden werden soll.

Bei den hohen Gesamtreduktionsgraden durch Plattieren und Walzen, die das Verfahren zulässt und es besonders wirtschaftlich machen, kann die Rekristallisation bereits bei niedrigen Temperaturen von ca. 150° C bis 450° C eintreten. Auch eine solche Erwärmung wird als rekristallisierendes Glühen i.S.d. erfindungsgemäßen Verfahrens verstanden.

### 10. Weitere Verformung nach dem rekristallisierenden Glühen

Der erfindungsgemäß hergestellte bandförmige Schichtverbund kann nun weiter erheblich verformt werden, z.B. durch Tiefziehen mit einem Verformungsgrad von mehr als 20 %, vorzugsweise mehr als 45 %.

### 11. Grenzen

Begrenzt wird das Verfahren dadurch, dass
- ein zu plattierendes bandförmiges Schichtpaket maximal eine Dicke von ca. 15 mm haben sollte, da nur Band bis zu etwa dieser Stärke auf- und abgecoilt werden kann und i.d.R. nur Bänder bis zu dieser Dicke als Ausgangsmaterial zur Verfügung stehen.
- eine zu plattierende Folie als Ausgangsmetallband eine Mindestdicke von ca. 40 µm haben sollte, da ansonsten das Risiko besteht, dass die Folie beim Plattieren reißt.
- das Schichtmaterial als Band herstellbar und plastisch verformbar sein muss. Das schließt z.B. Chrom als Schichtmaterial aus.
- die Verbindung durch Walzplattieren möglich sein muss.
- die gebildeten Schichtpakete eine Dicke haben sollen, die insgesamt nahe am maximalen Walzspalt des verwendeten Plattiergerüstes liegt, damit das erfindungsgemäße Verfahren möglichst effizient eingesetzt werden kann. Bevorzugt können Schichtpakete gebildet werden, die mindestens so dick sind wie der am Plattiergerüst zur Verfügung stehende Walzspalt.

### H. Erreichte Vorteile

Das erfindungsgemäße Verfahren zur Herstellung dünner Schichten an der Oberfläche oder in einem Schichtverbund aus wenigstens zwei verschiedenen Metallen weist ökonomische und technische Vorteile gegenüber dem Stand der Technik auf.

Das vorgeschlagene Verfahren ist besonders ökonomisch:
- Es werden dicke Schichten mit wenigstens einem dicken Metallband verbunden. Dadurch wird die zu beschichtende Fläche drastisch reduziert. Durch die frühzeitige Verbindung in der Stufe der Fertigungsprozesse werden die dicken Schichten ohne Anfall zusätzlicher Kosten mit reduziert, da das Metallband durch Walzen ohnehin reduziert werden muss.
- Da das zum Plattieren eingesetzte und die jeweilige Schicht bildende Ausgangsmetallband - im Vergleich zu seiner Enddicke - relativ dick ist, kann die mit überproportional hohen Kosten verbundene Herstellung dünner Bänder vermieden werden. Dünn werden die Schichten erst durch das Plattieren auf das Metallband und die darauf folgende weitere Reduktion zusammen mit dem beschichteten Metallband, insbesondere einem Kernmaterial.
- Schichtmaterial / Ausgangsmetallband aus elektrolytisch hergestelltem Material ist preiswerter als schmelzmetallurgisch hergestelltes Band.
- Walzplattieren in Kombination mit anschließender weiterer Reduktion durch Walzen ist ein besonders effizientes Verfahren der Flächenvergrößerung, da die Reduktion durch Walzplattieren und die weitere Reduktion durch Walzen multiplikativ verknüpft sind.

Das vorgeschlagene Verfahren weist darüber hinaus auch technische Vorzüge auf:
- Elektrolytisch hergestelltes Ausgangsmetallband / Schichtmaterial kann einschlussfrei produziert werden. Das ist für die Herstellung geschlossener dünner Schichten eine notwendige Voraussetzung.
- Durch die hohe Verdichtung des Materials beim Plattieren und Walzen entsteht - im Gegensatz zu den Dünnbeschichtungsverfahren - eine porenfreie Oberfläche.
- Das Einbringen von Oxiden und anderen nichtmetallischen Einschlüssen wird durch elektrolytisch statt schmelzmetallurgisch hergestelltes Ausgangsmaterial bereits vermindert. Da dieses Material auch noch als relativ dickes Band aufgebracht wird, ist die mit Oberflächenoxiden behaftete Fläche im Vergleich zum Aufbringen auf dünneres Material geringer.
- Beim Plattieren und anschließenden Glühen erstreckt sich die Mischkristallbildung über eine geringere Fläche als bei Dünnschichtbeschichtungsverfahren, weil beim Plattieren das Glühen nicht am endabmessungsnahen Produkt erfolgt. Die Mischkristallbildung erstreckt sich bei einer Glühung nach dem Walzen auch über eine geringere Dicke, da statt einer Diffusionsglühung nur eine Rekristallisationsglühung erfolgen muss, die in kurzer Zeit in einer Durchlaufglühe erfolgen kann.
- Sowohl beim Plattieren als auch beim Auswalzen werden Basismaterial und Beschichtung proportional reduziert, so dass Ausgangs- und Enddicken einfach berechnet werden können.

### I. Ausführungsbeispiel

Eine bevorzugte Ausführungsform der Erfindung betrifft die Herstellung eines nickelplattierten Stahlbandes, das zu Batteriebechern verarbeitet wird. Batteriebecher der Größe AA haben z.B. nur eine Wandstärke von ca. 200 µm bei einer Nickelschichtdicke von ca. 1,0 µm. Einschlüsse im Stahl oder in der Nickelbeschichtung können daher zu Rissen und Löchern im Material führen. Das Ausgangsmetallband und das weitere Metallband (also sowohl die Nickelbeschichtung als auch der Stahl) müssen daher in einem extremen Maße einschlussfrei sein. Die Batteriebecherhersteller haben folgende Qualitätsvorschrift für das Material, aus dem Batteriebecher hergestellt werden, hinsichtlich nichtmetallischer Einschlüsse:
- weniger als 0,2 Einschlüsse pro m²
- einzelne Partikel nicht größer als 1 µm
- Einschlussanhäufungen (cluster) nicht länger als 5 µm.

Soweit Batteriebecher eine Nickelbeschichtung aufweisen, z.B. bei Alkali-Mangan-Batterien, wird die Beschichtung z.Zt. ausschließlich elektrogalvanisch aufgetragen. Damit wird sichergestellt, dass die Beschichtung selbst einschlussfrei ist, so dass der Grundkörper aus Stahl mit einer geschlossenen ca. 0,5 µm bis 3,0 µm messenden Nickelschicht bedeckt wird. Die Beschichtung ist allerdings spröde, hat eine kolumnare Struktur, ist porig und für das Tiefziehen zu Bechern nicht ausreichend haftfest. Zur Umkörnung und zur Erhöhung der Haftfestigkeit der Beschichtung muss der beschichtete Stahl deshalb einem Glühprozess unterzogen und zur Beseitigung der Poren das Band nachgewalzt werden. Diese Arbeitsgänge wären bei einer haftfesten und porenfreien Beschichtung an sich nicht erforderlich, sie dienen aber bei der Herstellung von Batteriebechern aus galvanisch beschichtetem Stahl gleichzeitig der Erzeugung einer dickeren Diffusionsschicht und bestimmten Oberflächeneigenschaften. Eine dickere Diffusionsschicht soll sich dann nicht negativ auf die Korrosionsfestigkeit auswirken, wenn der Eisengehalt an der Oberfläche weniger als 30 Gew.% beträgt.

Bei einer Beschichtung durch Plattieren mit schmelzmetallurgisch erzeugter Nickelfolie müsste die Schichtdicke erhöht werden, um den geringeren Reinheitsgrad zu kompensieren. Außerdem müsste vermieden werden, dass das zu plattierende Nickelband nichtmetallische Einschlüsse enthält. Dazu ist u.U. ein Umschmelzen der Nickelbrammen erforderlich. Beide Effekte können das Plattieren mit schmelzmetallurgisch erzeugter Nickelfolie unwirtschaftlich machen.

Als Ausgangsmetallband für die erfindungsgemäße Nickelbeschichtung wurden sowohl elektrolytisch gewonnene 75 µm starke Folien als auch verbundene und zu 75 µm starken Folien ausgewalzte Kathodenbleche aus 99,98 % Nickel eingesetzt. Elektrolytisch als Folien gewonnene Bänder werden z.B. von Special Metals Wiggin Ltd., Hereford, UK, und Fukuda Metal Foil & Powder Co. Ltd., Kyoto, Japan hergestellt.

Die aus Kathodenblechen hergestellten Folien sind aufgrund der starken Reduzierung bereits porenfrei. Die elektrolytisch gewonnenen Folien sind porig, die Poren werden aber durch den beim Plattieren ausgeübten Druck, die anschließende Diffusionsglühung und Nachwalzen beseitigt.

Ein besonderer Vorzug des Verfahrens ist, dass die Dicke der Beschichtung, d.h. die Dicke von Ausgangsmetallbändern (Nickel) auf beiden Seiten eines weiteren Metallbandes / Kernmaterials (Stahl) unterschiedlich gewählt werden kann. Die Seite, die später die Innenseite des Batteriebechers wird, kann mit einer dickeren, die spätere Außenseite mit einer dünneren Schicht hergestellt werden.

Das Kernmaterial bzw. das gesamte Schichtpaket wird durch Plattieren und Walzen im Beispielsfall um insgesamt 96 % reduziert. Auch bei diesem hohen Reduktionsgrad muss das Material möglichst zipfelfrei sein.

Als weiteres Metallband, das den Kern eines erfindungsgemäßen Schichtverbundes bildet, wurde ein Stahl mit folgender Zusammensetzung und folgenden Eigenschaften eingesetzt:

| **Element** | | **Wert** | **vorzugsweise** | **noch weiter bevorzugt** |
|---|---|---|---|---|
| | | % | % | % |
| Kohlenstoff | C | ≤ 0,08 | ≤ 0,03 | 0,0005 bis 0,008 |
| Mangan | Mn | ≤ 0,60 | ≤ 0,45 | 0,015 bis 0,45 |
| Phosphor | P | ≤ 0,04 | ≤ 0,02 | < 0,025 |
| Schwefel | S | ≤ 0,04 | ≤ 0,02 | 0,005 bis 0,02 |
| Aluminium | Al | ≤ 0,15 | < 0,15 | 0,005 bis 0,06 |
| Silizium | Si | ≤ 0,1 | < 0,1 | < 0,04 |
| Titan | Ti | ≤ 0,015 | ≤ 0,005 | |
| Stickstoff | N | | | < 0,005 |

Ein Glättstich zur Einebnung der Rauhigkeit des Warmbandes hat sich als nicht erforderlich erwiesen. Rauhheitsmaxima, die dazu führen, dass Eisen bis an die Oberfläche der Plattierfolie stößt, sind unschädlich, da bis zu ca. 30 % Eisen in der Oberfläche der Nickelbeschichtung die Resistenz gegenüber alkalihaltigen Medien nicht negativ beeinflusst.

Die Nickelfolien wurden beidseitig auf Tiefziehstahl der o.a. Analyse von 6,0 mm Dicke mit einem Reduktionsgrad von 60 % plattiert. Der plattierte Schichtverbund war ca. 2,4 mm stark. Der Verbund wurde zur Verstärkung der Haftung in einer Haubenglühe geglüht. Durch das Glühen entsteht eine Mischkristallschicht von ca. 1,4 µm Dicke; sie wird durch den nachfolgend beschriebenen Walzprozess auf ca. 0,14 µm reduziert.

Der plattierte Schichtverbund wurde auf einem Sextogerüst um ca. 90 % auf 0,24 mm reduziert.

Da tiefentkohlter Stahl und Reinstnickel weiche Materialien sind, tritt bei den genannten Verformungsgraden kein Boudinage-Effekt auf.

Als Variante (nicht unter dem Schutzumfang der Erfindung) wurde zunächst ein 3,125 mm dickes aus verbundenen Kathodenblechen hergestelltes Nickelband einseitig durch Walzplattieren bei einem Reduktionsgrad von 70 % mit einem 0,52 mm dicken Kobaltband verbunden. Das Kobaltband kann gleichfalls aus verbundenen Kathodenblechen hergestellt werden oder als gewalztes Band (High Purity Cobalt) von Ametek Specialty Metals Products, Wallingford, CT, USA, bezogen werden. Dieser Verbund wurde weiter durch Walzen mit einem Reduktionsgrad von insgesamt 92 % reduziert.

| Arbeitsschritt | | | Nickel | Kobalt |
|---|---|---|---|---|
| | | | µm | µm |
| | Ausgangsmaterial | | 3125 | 520 |
| Plattieren | Reduktion in % | 70 | 937,5 | 156 |
| Walzen | Reduktion in % | 92 | 75 | 12,48 |

Nach weiterer Reduktion durch Plattieren auf Stahl mit einer Reduktion von 60 % und Auswalzen im Verbund mit einer Reduktion von 90 % beträgt die Kobalt-Schichtdicke 0,5 µm. Das mit Kobalt beschichtete Nickel weist nach der Verarbeitung zu Batteriebechern einen geringeren Übergangswiderstand auf als Reinnickel.

Die für die Herstellung von Batteriebechern geeignete Banddicke beträgt zwischen 0,1 mm und 0,765 mm bei einer Nickelschicht von ≤ 5 µm pro Seite, wobei die Dicke der Schicht, die später die Innenseite des Batteriebechers bildet, mindestens 0,5 µm bis 2 µm betragen soll.

Nach der Reduktion durch Walzen wird der Verbund zur Vorbereitung auf das Tiefziehen in einer Durchlaufglühe mit einer Glühtemperatur von 600° C bis 900° C bei einer Haltedauer von 30 Sek. bis 2 Min. geglüht. Bei Glühung in einer Haubenglühe wird eine Glühtemperatur von 550° C bis 710° C eingestellt. Die Haltedauer beträgt 2 bis 10 Std., die Aufheizdauer 1 Std. und die Abkühldauer auf 100° C 23 bis 33 Std. Die Dicke der durch das Glühen entstehenden Mischkristallschicht kann durch Wahl der Glühanlagen, der Glühtemperatur und der Glühdauer gezielt eingestellt werden.

Eine Zwischenglühung ist bei Stahl der noch weiter bevorzugten Zusammensetzung aufgrund des niedrigen Kohlenstoffgehalts und des sehr weichen als Auflage verwandten Reinnickels nicht erforderlich. Zur Rekristallisation ist eine kurzzeitige Erwärmung auf eine Glühtemperatur von 200 bis 450° C ausreichend.

Zur Verbesserung der mechanischen Werte wird das geglühte Band mit einem Verformungsgrad von 1 bis 2 % nachgewalzt.

An dem geglühten Material durchgeführte Tiefziehversuche mit einem Streckgrad von 50 % ergaben, dass die Oberfläche des tiefgezogenen Materials eine noch geschlossene Nickelschicht mit einer Mindestdicke von 1,0 µm aufwies.

Das Tiefziehen des Materials zu Batteriebechern kann nach verschiedenen Verfahren geschehen, die sich dadurch unterscheiden, wie sich die Stärke der Seitenwände ändert: Beim Stufenziehen (DTR = Drawing thin and redraw) wird die Dicke des Ausgangsblechs fast nicht verändert. Beim Streckziehen (DI = Drawing and ironing) bleibt die Bodenplatte fast unverändert dick, die Seitenwände werden gestreckt. Beim Streckziehen von Batteriebechern werden die Seitenwände i.d.R. um ca. 50 %, aber auch bis zu 80 % reduziert. Die Wanddicke beträgt nach dem Tiefziehen bei einer beidseitigen Nickelauflage von je 1,5 µm ca. 125 µm.

| Arbeitsschritt | Reduktion in % | Dicke | |
|---|---|---|---|
| | | Grundmaterial | Nickelbeschichtung |
| | | mm | pro Seite µm |
| Ausgangsmaterial | | 6,0 | 75 |
| Plattieren | 60 | 2,4 | 30 |
| Walzen | 90 | 0,24 | 3,0 |
| Tiefziehen | 50 | 0,12 | 1,5 |

Bei den im Beispiel angegebenen Reduktionsgraden führen Plattieren und Walzen zu einer Flächenvergrößerung auf das 25-fache.

Zur Herabsetzung des Übergangswiderstandes und zur Verbesserung der Tiefzieheigenschaften des Bandes kann in die Oberfläche Kobalt, Graphit oder Phosphor eingebaut werden.

Das Band hat vor dem Tiefziehen folgende Eigenschaften:

| **Mechanische Kennzeichen** | **Einheit** | **Wert** | **vorzugsweise** |
|---|---|---|---|
| Zugfestigkeit | MPa | ≤ 480 | ≤ 450 |
| Streckgrenze | MPa | 151 - 380 | 220 - 380 |
| Bruchdehnung | % | ≥ 18 | 34 |
| Härte | Vickers | 85 - 150 | 85 - 150 |
| Gefüge | | ferritisches Gefüge mit eingelagertem Zementit | |
| Korn | | globular | globular |

| | | gleichachsig oder pancake | gleichachsig oder pancake |
|---|---|---|---|
| Korngröße | ASTM | 7-12 | 9-12 |
| Delta r Wert | | +/- 0,3 | < +/- 0,2 |
| Langford-Wert | | ≥ 0,7 | ≥ 1,2 |

## Patentansprüche

1. Verfahren zur Herstellung eines metallischen Schichtverbundes, insbesondere bandförmigen Schichtverbundes, bei dem wenigstens ein Ausgangsmetallband aus wenigstens einem ersten Metall und mit einer Dicke von 40 Mikrometer bis 750 Mikrometer mit wenigstens einem weiteren Metallband aus wenigstens einem, bevorzugt jeweils zum ersten Metall verschiedenen zweiten Metall zu einem Schichtpaket geschichtet wird,
**dadurch gekennzeichnet, dass** die Gesamtdicke des Schichtpakets im Bereich von 5 mm bis 10 mm liegt, und durch Walzplattieren die einzelnen Schichten des Schichtpaketes miteinander verbunden werden, wonach der entstandene Schichtverbund durch Walzen in wenigstens einem Stich weiter reduziert wird, wobei das wenigstens eine Ausgangsmetallband im Verbund auf jeweils 0,5 bis 10 Mikrometer Dicke reduziert wird, wobei durch das Walzen eine Gesamtreduktion erzeugt wird, die zu einer mindestens 25-fachen Flächenvergrößerung des erzeugten Schichtverbundes gegenüber dem ursprünglichen Schichtpaket führt.

2. Verfahren nach Anspruch 1, **dadurch gekennzeichnet, dass** der Vorgang des Walzplattierens einen Prozessschritt des Diffusionsglühens umfasst zur Verbesserung der Haftung der Schichten des Schichtverbundes und durch das Walzen in wenigstens einem Stich eine jeweilige zwischen einem Ausgangsmetallband und einem weiteren Metallband entstandene Diffusionsschicht in der Dicke mitreduziert wird.

3. Verfahren nach einem der vorherigen Ansprüche, **dadurch gekennzeichnet, dass** zur Bildung eines Schichtpaketes wenigstens ein einzelnes Ausgangsmetallband aus wenigstens einem Metall auf die Oberseite und/oder auf die Unterseite eines einzelnen weiteren Metallbandes geschichtet wird.

4. Verfahren nach Anspruch 3, **dadurch gekennzeichnet, dass** die Dicke eines einzelnen Ausgangsmetallbandes im Bereich von 0,8 - 15 Prozent der Dicke des einzelnen weiteren Metallbandes liegt.

5. Verfahren nach einem der vorherigen Ansprüche, **dadurch gekennzeichnet, dass** wenigstens ein Ausgangsmetallband ein Metallband ist, auf das oder in das wenigstens eine metallische Schicht appliziert wird, insbesondere dass das wenigstens eine Ausgangsmetallband als Metallband nach einem der vorherigen Ansprüche hergestellt wird.

6. Verfahren nach einem der vorherigen Ansprüche , **dadurch gekennzeichnet, dass** zur Vermeidung von Abrieb an Ausgangsmetallbändern, insbesondere außenliegend angeordneten Ausgangsmetallbändern eines Schichtpaketes, diese Ausgangsmetallbänder durch eine weitere Schicht geschützt werden, die durch Abrieb während des Plattierens und weiteren Auswalzens zumindest zum Teil, bevorzugt vollständig abgetragen wird.

7. Verfahren nach einem der vorherigen Ansprüche, **dadurch gekennzeichnet, dass** wenigstens ein Ausgangsmetallband und/oder wenigstens ein weiteres Metallband durch elektrolytische Abscheidung von Metall hergestellt werden, insbesondere aus zu einem Band aneinandergefügten elektrolytisch hergestellten Kathodenblechen, insbesondere die nach dem Aneinanderfügen gewalzt werden.

8. Verfahren nach einem der vorherigen Ansprüche, **dadurch gekennzeichnet, dass** ein Ausgangsmetallband und/oder weiteres Metallband durch Beizen in Säure, insbesondere Salzsäure, und/oder Dressieren auf vorbestimmte Rauheitswerte eingeschränkt wird.

9. Verfahren nach einem der vorherigen Ansprüche, **dadurch gekennzeichnet, dass** der mit dem wenigstens einen Stich reduzierend gewalzte Schichtverbund rekristallisierend in einer Durchlaufglühe geglüht wird, insbesondere deren Einsatz sicherstellt, dass eine entwickelte Mischkristallschicht weniger als 50 % der Dicke des Ausgangsmetallbandes aufweist, die das Ausgangsmetallband in dem Schichtverbund nach dem Plattieren und weiterer Reduktion des Schichtverbundes hat.

10. Verfahren nach einem der vorherigen Ansprüche, insbesondere nach Anspruch 3 oder 4, **dadurch gekennzeichnet, dass** für das wenigstens eine Ausgangsmetallband ein Nickelband eingesetzt wird und für das wenigstens eine weitere Metallband ein Stahl mit einem Kohlenstoffgehalt ≤ 0,08 Gew.% .

## Claims

1. Method for producing a metallic layered composite, in particular a strip-shaped layered composite, in which at least one starting metal strip composed of at least one first metal and having a thickness of 40 micrometres to 750 micrometres is layered with at least one further metal strip composed of at least one second metal, which is preferably different in each case to the first metal, to form a layer package,
**characterized in that** the overall thickness of the layer package lies in the range of 5 mm to 10 mm, and the individual layers of the layer package are bonded together by way of roll cladding, whereupon the resulting layered composite is further reduced by rolling in at least one pass, wherein the thickness of the at least one starting metal strip in the composite is reduced in each case to 0.5 to 10 micrometres, wherein the rolling operation generates an overall reduction which leads to an at least 25-fold increase in the surface area of the generated layered composite compared with the original layer package.

2. Method according to Claim 1, **characterized in that** the roll cladding operation comprises a process step of diffusion annealing in order to improve the adhesion of the layers of the layered composite, and the rolling in at least one pass also reduces the thickness of a respective diffusion layer formed between a starting metal strip and a further metal strip.

3. Method according to either of the preceding claims,
**characterized in that,** in order to form a layer package, at least one individual starting metal strip composed of at least one metal is layered on the top side and/or on the bottom side of an individual further metal strip.

4. Method according to Claim 3, **characterized in that** the thickness of an individual starting metal strip lies in the range of 0.8 - 15 percent of the thickness of the individual further metal strip.

5. Method according to one of the preceding claims,
**characterized in that** at least one starting metal strip is a metal strip on which or in which at least one metallic layer is applied, in particular **in that** the at least one starting metal strip is produced as a metal strip according to one of the preceding claims.

6. Method according to one of the preceding claims,
**characterized in that,** in order to avoid abrasion of starting metal strips, in particular externally arranged starting metal strips of a layer package, said starting metal strips are protected by a further layer which is at least partially, preferably completely, removed as a result of abrasion during the cladding and further rolling-out operations.

7. Method according to one of the preceding claims,
**characterized in that** at least one starting metal strip and/or at least one further metal strip are/is produced by electrolytic deposition of metal, in particular from electrolytically produced cathode sheets which have been joined together to form a strip, in particular which are rolled after the joining-together operation.

8. Method according to one of the preceding claims,
**characterized in that** a starting metal strip and/or further metal strip are/is limited to predetermined roughness values by way of pickling in acid, in particular hydrochloric acid, and/or skin pass rolling.

9. Method according to one of the preceding claims,
**characterized in that** the layered composite, which has been rolled in a reducing manner with the at least one pass, is annealed so as to recrystallize in a continuous annealing line, the use thereof in particular ensuring that a developed mixed crystal layer has less than 50% of that thickness of the starting metal strip which the starting metal strip has in the layered composite after the cladding and further reduction of the layered composite.

10. Method according to one of the preceding claims, in particular according to Claim 3 or 4, **characterized in that** a nickel strip is used for the at least one starting metal strip, and a steel with a carbon content ≤ 0.08% by weight is used for the at least one further metal strip.

## Revendications

1. Procédé de fabrication d'un composite stratifié métallique, notamment d'un composite stratifié en forme de bande, selon lequel au moins une bande métallique de départ en au moins un premier métal et ayant une épaisseur de 40 micromètres à 750 micromètres est stratifiée avec au moins une bande métallique supplémentaire en au moins un deuxième métal, de préférence à chaque fois différent du premier métal, pour former un paquet stratifié,
**caractérisé en ce que** l'épaisseur totale du paquet stratifié se situe dans la plage allant de 5 mm à 10 mm et, par placage par cylindrage, les couches individuelles du paquet stratifié sont reliées les unes avec les autres, après quoi le composite stratifié formé est réduit de manière supplémentaire par cylindrage en au moins une passe, ladite au moins une bande métallique de départ étant à chaque fois réduite dans le composite à 0,5 à 10 micromètres d'épaisseur, une réduction totale qui conduit à un agrandissement de surface d'au moins 25 fois du composite stratifié généré par rapport au paquet stratifié initial étant générée par le cylindrage.

2. Procédé selon la revendication 1, **caractérisé en ce que** l'opération de placage par cylindrage comprend une étape de processus de recuit par diffusion pour améliorer l'adhésion des couches du composite stratifié et une couche de diffusion respective formée entre une bande métallique de départ et une bande métallique supplémentaire est réduite dans l'épaisseur par le cylindrage en au moins une passe.

3. Procédé selon l'une quelconque des revendications précédentes, **caractérisé en ce que,** pour la formation d'un paquet stratifié, au moins une bande métallique de départ individuelle en au moins un métal est stratifiée sur le côté supérieur et/ou sur le côté inférieur d'une bande métallique supplémentaire individuelle.

4. Procédé selon la revendication 3, **caractérisés en ce que** l'épaisseur d'une bande métallique de départ individuelle se situe dans la plage allant de 0,8 à 15 pour cent de l'épaisseur de la bande métallique supplémentaire individuelle.

5. Procédé selon l'une quelconque des revendications précédentes, **caractérisé en ce qu'**au moins une bande métallique de départ est une bande métallique sur laquelle ou dans laquelle au moins une couche métallique est appliquée, notamment **en ce que** ladite au moins une bande métallique de départ est fabriquée en tant que bande métallique selon l'une quelconque des revendications précédentes.

6. Procédé selon l'une quelconque des revendications précédentes, **caractérisé en ce que** pour éviter l'abrasion sur des bandes métalliques de départ, notamment des bandes métalliques de départ agencées à l'extérieur d'un paquet stratifié, ces bandes métalliques de départ sont protégées par une couche supplémentaire, qui est enlevée au moins en partie, de préférence en totalité, par abrasion pendant le placage et le cylindrage supplémentaire.

7. Procédé selon l'une quelconque des revendications précédentes, **caractérisé en ce qu'**au moins une bande métallique de départ et/ou au moins une bande métallique supplémentaire sont fabriquées par dépôt électrolytique de métal, notamment à partir de tôles cathodiques fabriquées électrolytiquement aboutées en une bande, notamment qui sont cylindrées après l'aboutement.

8. Procédé selon l'une quelconque des revendications précédentes, **caractérisé en ce qu'**une bande métallique de départ et/ou une bande métallique supplémentaire sont limitées à des valeurs de rugosité prédéterminées par décapage dans un acide, notamment de l'acide chlorhydrique, et/ou dressage.

9. Procédé selon l'une quelconque des revendications précédentes, **caractérisé en ce que** le composite stratifié cylindré de manière réductrice avec ladite au moins une passe est recuit avec recristallisation dans un recuit continu, notamment dont l'utilisation assure qu'une couche cristalline mixte développée présente moins de 50 % de l'épaisseur de la bande métallique de départ, que la bande métallique de départ a dans le composite stratifié après le placage et la réduction supplémentaire du composite stratifié.

10. Procédé selon l'une quelconque des revendications précédentes, notamment selon la revendication 3 ou 4, **caractérisé en ce qu'**une bande de nickel est utilisée pour ladite au moins une bande métallique de départ et un acier ayant une teneur en carbone ≤ 0,08 % en poids est utilisé pour ladite au moins une bande métallique supplémentaire.
